Europäisches Patentamt

European Patent Office

Office européen des brevets

(19)

(11) Veröffentlichungsnummer: 0 035 590

A1

## (12) EUROPÄISCHE PATENTANMELDUNG

(21) Anmeldenummer: 80106347.0

(22) Anmeldetag: 18.10.80

(51) Int. Cl.³: H 04 Q 7/00

(30) Priorität: 03.03.80 DE 3008103

(43) Veröffentlichungstag der Anmeldung:
16.09.81 Patentblatt 81/37

(84) Benannte Vertragsstaaten:
AT BE DE FR IT NL

(71) Anmelder: ROBERT BOSCH GMBH
Postfach 50
D-7000 Stuttgart 1(DE)

(72) Erfinder: Gorzel, Heribert, Dipl.-Ing.
Forstweg 33 c
D-1000 Berlin 28(DE)

(72) Erfinder: Lange, Wolfgang
Am Hüllepfuhl 14
D-1000 Berlin 20(DE)

(74) Vertreter: Schmidt, Hans-Ekhardt
Robert Bosch GmbH Geschäftsbereich Elektronik
Patent- und Lizenzabteilung Forckenbeckstrasse 9-13
D-1000 Berlin 33(DE)

(54) Fahrzeugfunkgerät.

(57) Es wird ein Fahrzeugfunkgerät vorgeschlagen, das Schaltmittel zum selektiven Anruf von einer Zentralstation und zur Abgabe eines Quittungsrufes aufweist. Erfindungsgemäß ist im Fahrzeugfunkgerät ein Speichergerät vorgesehen, auf dem, beispielsweise bei Abwesenheit des Fahrers, empfangene Nachrichten aufgezeichnet werden können. Weiterhin ist es möglich, im Speichergerät Nachrichten einzuspeichern, die bei Anruf des Fahrzeugfunkgerätes zur Zentrale übertragen werden.

EP 0 035 590 A1

22/80
EK/PLI Wt/Li
29. 2.  1980


ROBERT BOSCH GMBH, 7000 Stuttgart 1


Fahrzeugfunkgerät


Stand der Technik


Die Erfindung geht aus von einem Fahrzeugfunkgerät
nach der Gattung des Hauptanspruchs.

Es sind bereits Fahrzeugfunkgeräte der verschiedensten Art bekannt, die von einer Zentralstation
selektiv angerufen werden können. Nach erfolgtem
Anruf gibt der Fahrer einen sogenannten Quittungsruf ab, wodurch in der Zentrale angezeigt wird, daß
sich der Fahrer im Fahrzeug befindet und damit zum
Empfang der zu übertragenden Nachricht bereit ist.
Bei Abwesenheit des Fahrers wird demnach kein Quittungsruf abgegeben, und die Nachricht kann nicht
übermittelt werden. Dies ist insbesondere dann von
Nachteil, wenn Nachrichten hoher Dringlichkeit übertragen werden müssen und der Fahrer etwa nur für
kurze Zeit das Fahrzeug verlassen hat. Es muß dann
von der Zentrale das Fahrzeug unter Umständen mehrfach erneut angerufen werden, bis eine Verbindung
hergestellt ist und die Nachricht übermittelt werden
kann.

Andererseits sind sogenannte Anrufbeantworter aus drahtgebundenen Telefonnetzen bekannt, die bei Anruf eine eingespeicherte Nachricht abgeben und anschließend, meist
für eine begrenzte Zeit, die Aufnahme einer Nachricht
ermöglichen, wobei der Anschlußinhaber die gespeicherten
Nachrichten nach Rückkehr vom Anrufbeantworter abspielen
kann. Diese bekannten Geräte eignen sich jedoch ausschließlich für stationären Einsatz und nicht für den
Betrieb an Bord eines Kraftfahrzeuges.

Vorteile der Erfindung

Das erfindungsgemäße Fahrzeugfunkgerät mit den kennzeichnenden Merkmalen des Hauptanspruchs hat demgegenüber den
Vorteil, daß ein Speichergerät bei Abwesenheit des Fahrers
ankommende bzw. auszusendende Nachrichten empfängt bzw.
sendet und hierdurch die Verbindung von der Zentralstation
zum Fahrzeug nur einmal hergestellt zu werden braucht.
Dies ergibt insgesamt eine Reduzierung der Belegungsdichte
des Funkkanals, so daß mehr Teilnehmer pro Funkkanal
untergebracht werden können.

Beschreibung der Erfindung

Das erfindungsgemäße Fahrzeugfunkgerät weist zunächst an
sich bekannte Schaltmittel auf, die einerseits einen selektiven Anruf von einer Zentralstation und andererseits die
Abgabe eines Quittungsrufes erlauben. Anruf und Quittung
haben dabei vorzugsweise die Form eines Tonsignales, beispielsweise einer Fünf-Tonfolge, oder eines digitalen Telegramms.

Erfindungsgemäß ist im Fahrzeugfunkgerät ein Speichergerät
vorgesehen, auf dem zu empfangende Nachrichten gespeichert
werden und/oder Nachrichten vom Fahrer gespeichert werden können, die bei Anruf des Fahrzeugfunkgerätes zur Zentralstation übermittelt werden. Damit können einerseits Nachrichten, die während der Abwesenheit des Fahrers eintreffen,
gespeichert und später von ihm abgespielt werden, ohne daß
ein nochmaliger Funkverkehr, eine Rückfrage, nötig ist.
Andererseits ist es möglich, daß der Fahrer vor Verlassen
des Fahrzeuges eine Nachricht in das Speichergerät einspeichert, beispielsweise eine Nachricht darüber, wo er während
seiner Abwesenheit vom Fahrzeug erreichbar ist, wobei diese
Nachricht in seiner Abwesenheit bei jedem Anruf von der
Zentralstation zu dieser übermittelt wird, so daß der Fahrer
auf anderem Wege, beispielsweise über das drahtgebundene
Telefonnetz, erreicht werden kann.

Das Speichergerät ist dabei vorzugsweise als Kassettenrekorder ausgebildet, es ist jedoch auch möglich, als
Speicherelemente Festwertspeicher zu verwenden, in die oder
von denen bestimmte Telegrammworte übertragen werden können,
wobei jedes Telegrammwort einer vorher verabredeten Nachricht
entspricht, beispielsweise der Nachricht, eine bestimmte
Person zurückzurufen.

Der Anruf des mobilen Teilnehmers erfolgt in an sich bekannter
Weise durch einen Selektivruf, vorzugsweise einen Fünf-Tonfolgeselektivruf. Das Fahrzeugfunkgerät ist vom Fahrer vor
Verlassen des Fahrzeuges so eingestellt worden, daß der vom
Fahrzeugfunkgerät nun zurückgesendete Quittungsruf eine derartige Kodierung aufweist, daß die Zentralstation erkennt,
daß das Fahrzeugfunkgerät zur Zeit nicht besetzt, das Speichergerät jedoch auf Bereitschaft geschaltet ist. Diese Kodierung
kann bei einem Fünf-Tonfolgeruf in vorteilhafter Weise dadurch
bewirkt werden, daß jeweils entweder eine gerade oder eine
ungerade Endziffer ausgestrahlt wird, je nachdem, ob das Fahrzeugfunkgerät besetzt ist oder nicht. Im letzteren Fall ist das Speichergerät auf Bereitschaft geschaltet und läuft nach Eintreffen des Selektivanrufs an. Hierbei wird nun entweder zunächst eine vorher eingespeicherte Nachricht zur Zentralstation übertragen, oder es wird unmittelbar auf Empfang der von der Zentralstation zu übertragenden Nachricht geschaltet. Die Abschaltung des Speichergerätes erfolgt dabei entweder selbsttätig nach einer vorbestimmten Zeit oder von der Zentralstation gesteuert in Abhängigkeit vom Träger- oder NF-Signal, vorzugsweise mit zeitlicher Verzögerung.

Um zu vermeiden, daß bei Verwendung eines Kassettenrekorders zu Beginn der Aufnahme der von der Zentralstation übertragenen Nachricht das Vorspannband vor dem Aufnahmekopf liegt, wird weiterhin bei Betätigen der Bereitschaftstaste durch den Fahrer vor Verlassen des Fahrzeuges der Vorlauf des Kassettenrekorders für eine kurze Zeit eingeschaltet, so daß das Vorspannband den Aufnahmekopf passiert hat.

In einer weiteren Ausführungsform der Erfindung ist es schließlich möglich, insbesondere bei der Übertragung von kodierten Telegrammwörtern in einen Festwertspeicher, an das Speichergerät einen Drucker anzuschließen, auf dem die übertragenen Daten ausgedruckt werden können.

22/80
EK/PLI Wt/Li
29. 2.   1980


ROBERT BOSCH GMBH, 7000 Stuttgart 1

Ansprüche

1. Fahrzeugfunkgerät mit Schaltmitteln zum selektiven
   Anruf von einer Zentralstation und zur Abgabe eines
   Quittungsrufes, dadurch gekennzeichnet, daß ein
   Speichergerät vorgesehen ist, auf dem, vorzugsweise
   bei Abwesenheit des Fahrers, auszusendende und/oder
   zu empfangende Nachrichten speicherbar sind.

2. Fahrzeugfunkgerät nach Anspruch 1, dadurch gekennzeichnet, daß das Speichergerät als Kassettenrekorder
   ausgebildet ist.

3. Fahrzeugfunkgerät nach Anspruch 1 oder 2, dadurch
   gekennzeichnet, daß das Speichergerät durch einen
   Selektivruf von der Zentralstation ansteuerbar ist.

4. Fahrzeugfunkgerät nach einem der vorhergehenden
   Ansprüche, dadurch gekennzeichnet, daß der Quittungsruf eine Kodierung aufweist, die die Aufnahmebereitschaft des Speichergerätes zur Zentralstation anzeigt.

5. Fahrzeugfunkgerät nach einem der vorhergehenden
   Ansprüche, dadurch gekennzeichnet, daß Anruf und
   Quittung in an sich bekannter Weise aus Tonsignalen
   oder digitalen Telegrammen bestehen.

6. Fahrzeugfunkgerät nach einem der vorhergehenden
   Ansprüche, dadurch gekennzeichnet, daß das Speichergerät in Abhängigkeit vom Träger- oder NF-Signal,
   vorzugsweise mit zeitlicher Verzögerung, abschaltbar
   ist.

- 2 -

7. Fahrzeugfunkgerät nach Anspruch 6, insbesondere für
   Diversity-Anlagen, dadurch gekennzeichnet, daß das
   Speichergerät in Abhängigkeit von einem zum Fahrzeug
   übermittelten Datentelegramm abschaltbar ist.

8. Fahrzeugfunkgerät nach einem der Ansprüche 1 bis 5,
   dadurch gekennzeichnet, daß bei Anruf zunächst eine
   im Speichergerät gespeicherte Information zur
   Zentralstation übertragen und alsdann, vorzugsweise
   für eine vorbestimmte Zeit, die zum Fahrzeugfunkgerät
   übermittelten Nachrichten gespeichert werden.

0035590

**Nummer der Anmeldung**

EP 80 10 6347

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 303 429 (LABORATOIRE CENTRAL DE TELECOMMUNICATIONS)<br><br>* Seite 3, Zeile 11 - Seite 10, Zeile 21; Figuren 1,2 *<br><br>-- | 1-6,8 |
| X | DE - C - 926 613 (GASSMANN)<br><br>* Seite 2, Zeilen 18-102; Seite 4, Zeilen 23-44; Anspruch 1; Figur 1 *<br><br>-- | 1-3,4,7 |
| X | US - A - 4 172 969 (LEVINE)<br><br>* Spalte 2, Zeile 61 - Spalte 5, Zeile 23; Figuren 1,2 *<br><br>-- | 1 |
| X | IEEE TRANSACTIONS ON VEHICULAR TECHNOLOGY, Band VT-25, Nr. 4, August 1977, Seiten 202-206 New York, U.S.A. T. DE HAAS: "Digital selective calling and direct printing techniques in the mobile maritime service"<br><br>* Seite 203, linke Spalte, Zeile 8 - rechte Spalte, Zeile 3 *<br><br>-- | 1-3,5 |
| X | DE - A - 2 601 364 (DAINI SEIKOSHA)<br><br>* Anspruch 1; Figur 1 *<br><br>---- | 1 |

**KLASSIFIKATION DER ANMELDUNG (Int Cl )**

H 04 Q 7/00

**RECHERCHIERTE SACHGEBIETE (Int. Cl )**

H 04 Q 7/00
7/02
7/04

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Grunden angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 01-06-1981 | WANZEELE |

EPA form 1503.1 06.78